# EUROPEAN PATENT SPECIFICATION

(11) **EP 4 447 502 B1**
(45) Date of publication and mention of the grant of the patent: **07.10.2026**
(21) Application number: 24169348.0
(22) Date of filing: 09.04.2024
(51) Int. Cl.: H04W 88/04, H04W 4/12, H04W 4/80

(54) **METHOD FOR MESSAGE TRANSMISSION BETWEEN DEVICES, DEVICE FOR FORWARDING MESSAGES BETWEEN DEVICES, AND SYSTEM FOR MESSAGE TRANSMISSION BETWEEN DEVICES**
VERFAHREN ZUR NACHRICHTENÜBERTRAGUNG ZWISCHEN VORRICHTUNGEN, VORRICHTUNG ZUR WEITERLEITUNG VON NACHRICHTEN ZWISCHEN VORRICHTUNGEN UND SYSTEM ZUR NACHRICHTENÜBERTRAGUNG ZWISCHEN VORRICHTUNGEN
PROCÉDÉ DE TRANSMISSION DE MESSAGE ENTRE DES DISPOSITIFS, DISPOSITIF DE TRANSMISSION DE MESSAGES ENTRE DES DISPOSITIFS ET SYSTÈME DE TRANSMISSION DE MESSAGE ENTRE DES DISPOSITIFS

(30) Priority: 13.04.2023 WO PCT/CN2023/088061
(43) Date of publication of application: 16.10.2024
(73) Proprietor: Orange, 92130 Issy-les-Moulineaux (FR)
(72) Inventor: JIAO, Shi, BEIJING, 100013 (CN); GUO, Zhihong, BEIJING, 100013 (CN)
(74) Representative: Plasseraud IP

(56) References cited:
- US-A1- 2015 055 551
- GUO S ET AL: "Design and implementation of the KioskNet system", COMPUTER NETWORKS, ELSEVIER, AMSTERDAM, NL, vol. 55, no. 1, 7 January 2011 (2011-01-07), pages 264 - 281, XP027596887, ISSN: 1389-1286, [retrieved on 20100810], DOI: 10.1016/J.COMNET.2010.08.001
- MAO YE ET AL: "Fair Delay Tolerant Mobile Data Ferrying", MOBILE DATA MANAGEMENT: SYSTEMS, SERVICES AND MIDDLEWARE, 2009. MDM '09. TENTH INTERNATIONAL CONFERENCE ON, IEEE, PISCATAWAY, NJ, USA, 18 May 2009 (2009-05-18), pages 182 - 191, XP031476819, ISBN: 978-1-4244-4153-2
- BYCHKOVSKY V ET AL: "The CarTel mobile sensor computing system", SENSYS'06 : PROCEEDINGS OF THE FOURTH INTERNATIONAL CONFERENCE ON EMBEDDED NETWORKED SENSOR SYSTEMS : OCT. 31 - NOV. 3, 2006, BOULDER, COLORADO, USA, ASSOCIATION FOR COMPUTING MACHINERY, NEW YORK, NY, USA, 31 October 2006 (2006-10-31), pages 383 - 384, XP040051855, ISBN: 978-1-59593-343-0, DOI: 10.1145/1182807.1182866

## Description

### FIELD OF INVENTION

The present invention relates to the field of message transmission between devices, such as mobile phones, laptops, or other devices with messaging capabilities.

### BACKGROUND

In today's connected world, communication through messages, such as instant messaging, email, and other internet-based channels has become an essential part of daily life. The widespread availability of the internet and mobile devices has made it possible for people to communicate with one another from anywhere, at any time.

A known method of message transmission is through the internet, using communication protocols such as TCP/IP and HTTP, via wire or wireless communication, such as cellular network-based communication. This allows messages to be sent and received in real-time, providing a fast and efficient way to communicate.

However, there are still many situations where internet connectivity is not available or is unreliable, such as in remote or rural areas, or during natural disasters or other events that disrupt infrastructure. When the internet connectivity is unreliable, messages can be lost or fail to transmit due to lack of internet connectivity. In such a case, one can try to communicate with others by traditional letters, through which it is hard to share multimedia contents, such as videos, in an efficient manner.

In "Design and implementation of the KioskNet system", Guo S et al, COMPUTER NETWORKS, ELESEVIER, AMSTERDAM, NL, vo. 66, no 1, 7 January 2011 (2011-01-07), pages 264-281, XP027596887, a so-called "KioskNet" architecture is described, which is primarily designed for areas with limited internet access, often in developing countries, and intends to improve the sustainability and robustness of rural Internet kiosks in developing countries.

Such an architecture employs a combination of stationary kiosks and mobile ferries (vehicles) to provide digital connectivity. More precisely, computer "Kiosk" controllers are implemented in so-called kiosks, these controllers being able to communicate wirelessly with a computer mounted on a vehicle (such as a bus) which can carry data to and from a gateway, where these data can be further exchanger with the internet.

However, such an architecture is rather technically complex and costly since, in order to send emails as well as data to various types of network applications (e.g. financial applications), it includes not only a personal computer with the email client itself, but also OCMP, SMTP plugin, as well as gateway and proxy servers, among others.

In "Fair Delay Tolerant Mobile Data Ferrying", Mao Ye et al, Mobile Data Management: Systems, services and middleware, 2009. MDM'09, Tenth International Conference On, IEEE, Piscataway, NJ, USA, 18 May 2009 (2009-05-18), pages 182-191, XP031476819, a method for fair and efficient internet service in rural areas using a ferry-based system is described. This method focuses on scheduling and optimizing the delivery of messages through ferries to various village kiosks from an internet gateway, and thus addresses the challenge of bringing low-cost internet access to remote rural areas using ferries such as buses and cars equipped with Wi-Fi for message ferrying between the internet and remote villages.

In "The CarTel mobile sensor computing system", SENSYS'06 : PROCEEDINGS OF THE FOURTH INTERNATIONAL CONFERENCE ON EMBEDDED NETWORKED SENSOR SYSTEMS : OCT. 31 - NOV. 3, 2006, BOULDER COLORADO, USA, 31 October 2006 (2006-10-31), pages 383-384, XP040051855, the technical problem of efficiently utilizing the vast amount of data generated by the numerous sensors present in modern automobiles is addressed. The document explores how this data can be used in various applications such as traffic monitoring, preventive maintenance of cars, and civil infrastructure monitoring.

US 2015/055551 describes a single mobile wireless access point (AP) that can queue messages for devices that are temporarily disconnected from it.

The present invention aims thus at providing a method, a device and a system to transmit messages when the internet connectivity is not available, in a more cost effective and technically simple way.

### SUMMARY OF THE INVENTION

In this regard, according to one aspect of the invention, it is provided a method for message transmission between devices, comprising:
- storing a first message received from a first device through a short-range wireless connection, said first message being intended for a second device; and
- after a positive determination that a connection to internet is established, forwarding the first message towards said second device through internet.

By virtue of such a method, it provides a simple and wise solution to transmit message between two devices in case of no internet connection for the first device.

In an embodiment, the step of forwarding the first message towards the second device through internet comprises:
- sending the first message to a dedicated server through internet;
- sending the first message from the dedicated server to the second device through internet.

By using a dedicated server such as a web server, it is more efficient and reliable to transmit the message to the second device, especially when the second device does not always have an internet connection.

In another embodiment, the storing and forwarding steps are performed by a third device and wherein, before that the third device receives the first message from the first device, the method comprises the following steps, performed by the first device :
- detecting at least one device able to forward the first message to the second device ; and
- selecting said third device among the detected at least one device.

With this arrangement, it is possible to choose the most suitable device to perform the storing and forwarding steps.

In yet another embodiment, in the step of sending the first message from the dedicated server to the second device, the method according to the present invention further comprises the following steps:
- sending the first message from the dedicated server to a fourth device which is capable of being associated through a short-range wireless connection with the second device;
- forwarding the first message from the fourth device to the second device (B) when a short-range wireless connection is established between the fourth device and the second device.

With such an additional arrangement, the present invention may provide both "direct" and "indirect" forwarding of the first message, which is useful when the second device is not reachable to the dedicated server.

In yet another embodiment, a first identification information related to the second device is inserted by the first device in the first message, said first identification information being used when forwarding the first message to the second device.

With this configuration, it is more efficient for the second device to be identified when forwarding the message.

In yet another embodiment, the method according to the present invention further comprises, after the step of forwarding the first message to said second device through internet, deleting said first message, as so to keep the confidentiality.

In an embodiment, this step of deleting said first message is automatically triggered upon the transmission, by said third device, of the first message towards said second device.

In an alternative embodiment, this step of deleting said first message is automatically triggered upon reception, by said third device, of a receipt acknowledge message, sent by one of said second device, dedicated server or fourth device upon receiving said first message.

In yet another embodiment, the method according to the present invention further comprises:
- storing a second message received from the second device through internet, said second message being intended for the first device; and
- after a positive determination that a short-range wireless connection can be established with the first device, forwarding the second message to said first device through said short-range wireless connection.

With these additional steps, it is possible for the first device to receive a response message from the second device when the internet connection is not available to the first device.

Furthermore, a second identification information related to the first device is inserted by the second device in the second message, said second identification information being used by the second device when sending the second message through internet and/or when forwarding the second message to the first device through a short-range wireless connection.

Alternatively, the method according to the present invention further comprises deleting the first message stored in a third device after having forwarded said first message towards the second device through internet and/or deleting the second message stored in a fourth device after having forwarded said second message to the first device.

With these additional steps, the risks of a privacy breach regarding the forwarded messages, in case of a fraudulent access to the device forwarding them, are limited.

Alternatively, the message includes text, voice, or video.

Alternatively, the first message is encrypted.

Alternatively, the short-range wireless connection is based on short-range wireless technology standard comprising Bluetooth or NFC.

According to another aspect of the invention, it is provided a device for forwarding messages between devices, said forwarding device comprising:
- a module for receiving a first message from a first device through a short-range wireless connection, said first message being intended for a second device;
- a module for storing the received first message; and
- a module for, after a positive determination that said forwarding device has established a connection to internet, forwarding the first message towards said second device through internet.

Moreover, the device further comprises:
- a module for receiving a second message from the second device through internet, said second message being intended for said first device;
- a module for storing said second message; and
- a module for, after a positive determination that the forwarding device can connect with the first device through a short-range wireless connection, forwarding the second message to said first device through said short-range wireless connection.

According to yet another aspect of the invention, it is provided a computer program comprising instructions which, when the program is executed by a processing module of a device (such as a processor or microprocessor of a mobile terminal), cause the processing module to carry out the method as mentioned above.

### BRIEF DESCRIPTION OF THE DRAWINGS

Other features and advantages of the present invention will appear in the description hereinafter, in reference to the appended drawings, where:
Figure 1 illustrates an exemplary embodiment according to the present invention.
Figure 2 illustrates a detailed exemplary embodiment of transmitting a first message from a first device A to a second device B;
Figure 3 illustrates a detailed exemplary embodiment of transmitting a second message from a second device B to a first device A; and
Figure 4 illustrates another detailed exemplary embodiment of transmitting a first message from a first device A to a second device B.

### DESCRIPTION OF EMBODIMENTS

Hereinafter, exemplary embodiments according to the present invention will be described in detail with reference to the accompanying drawings.

The method according to the present invention is adapted to be used on various kinds of devices, such as mobile phones, laptops, or other devices with messaging capabilities. The embodiments of this application do not limit any specific type of these devices.

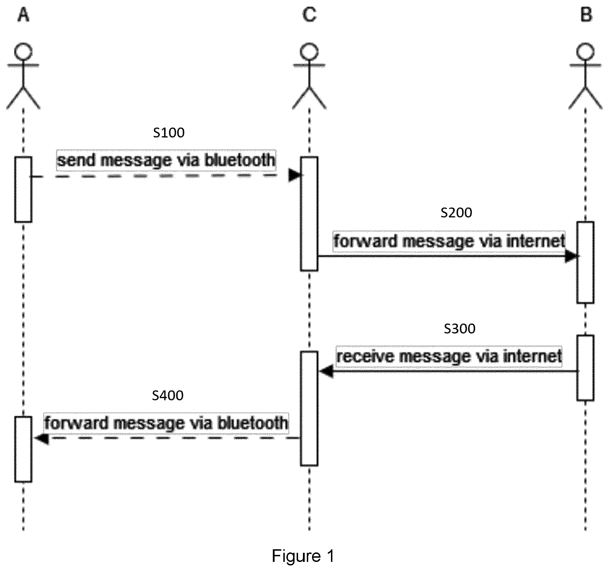

An exemplary method according to the present invention is now discussed with reference to **Figure 1****.**

In this exemplary method, in a situation where internet connection is not available to a first device A, the first device A sends a first message intended for a target device, i.e. a second device B, comprising data such as text, voice, video, and/or any form of information, to a third device, i.e. a forwarding device C, via a short-range wireless connection based on short-range wireless technology standard such as Bluetooth or NFC, or any other available short-range wireless technology (step S100).

After receiving such a first message, the forwarding device C stores this first message in a memory module embedded in this forwarding device C, for instance in a local database stored in a memory of this device C. This allows the forwarding device C, which may also be unable to connect to internet when it is located in the proximity of the first device A (for instance because the area where both devices A and C are located is not under any mobile network coverage), to keep and transport the message until device C moves to a location where an internet connection becomes available.

Then, when the forwarding device C determines an internet connectivity and connects to internet (typically because forwarding device C has moved to a location where such an internet connectivity becomes possible, for instance where a radio connection to a mobile network becomes available and an internet connection becomes possible through this radio connection), this forwarding device C forwards the first message to the second device B through internet (step S200).

In a specific embodiment, before sending the first message to the third device C, the first device A may first detect and list at least one device capable of forwarding the first message to the second device B, for instance by detecting the surrounding devices with which it can establish a short-range wireless connection based on a short-range wireless technology standard and determining, within these surrounding devices, which ones offer this forwarding service (for instance by detecting a device on which a dedicated application for forwarding message is installed).In such a case, the first device A then selects the third device C among the detected at least one device which is capable of forwarding the first message.

In an embodiment, the first message may also contain a first identification information related to the second device, which is inserted by the first device A into the first message. Such a first identification information is for example the phone number of the second device B (in particular its cell phone number) and can be used when the first message is forwarded to the second device B.

In another embodiment, after forwarding the first message to said second device through internet, the third device C may also be configured to delete the first message from its local database, so that this first message remains stored in this database only for the necessary amount of time, which guarantees that its privacy is preserved as much as possible while allowing a forwarding device to temporarily store it for the purpose of implementing this forwarding service.

In a first specific implementation of such an embodiment, the deletion of the first message by the third device C may be automatically triggered by the transmission, by this third device C, of the first message towards the second device B (e.g. the transmission of this first message to a dedicated server the third device C is associated with, once the internet connectivity is available for the third device C, as explained later), and preferably as soon as the first message has been transmitted by the third device C.

Such a specific implementation minimizes the temporary storage duration of the first message on the third device C, hence preserving its confidentiality towards a potentially malicious user accessing this third device C, at the cost of a risk for this third device C to leave the area where it has internet connectivity without being sure f a successful forwarding of this first message towards the second device B, should a network problem occur on its transmission path towards the second device B.

In an alternative implementation of such an embodiment, the deletion of the first message by the third device C may be automatically triggered by the reception of a receipt acknowledgement message, which is be emitted either by an intermediate device (such as a dedicated server the third device C is associated with or a fourth device D, as explained later) or by the second device C itself, upon reception of this first message.

The further away from the third device C is the device acknowledging receipt of the first message, the more the third device C is ensured that the first message is properly transmitted towards the second device B, at the cost of an increased duration of the temporary storage of this first message by the third device C :
In a first embodiment of this alternative implementation where a dedicated server associated with the third device C, to which the third device C forwards the first message as soon as it detects internet connectivity, sends to the third device C a receipt acknowledgement message of the first message, it is the reception of this receipt acknowledgement message that triggers the third device C to delete the first message. In such an implementation, the temporary storage duration of this first message by the third device C is longer than in the above-mentioned first specific implementation (hence weakening the confidentiality of this first message), but the third device C is ensured that the first message has reached the dedicated server through internet, and thus that it can leave the area where it has internet connectivity with a good prospect that this first message will be successfully delivered to the second device B. Such an embodiment is thus a good trade-off between preserving the confidentiality of the message to be forwarded and ensuring a successful delivery of this message.

In a second embodiment of this alternative implementation where the second device B sends to the third device C a receipt acknowledgement message of the first message, it is the reception of this receipt acknowledgement message that triggers the third device C to delete the first message. In such an implementation, the temporary storage duration of this first message by the third device C is much longer than in the above-mentioned implementations (hence weakening even more than in the previous embodiment the confidentiality of this first message), but the third device C is ensured that the first message has reached its destination, and thus that it can not only leave the area where it has internet connectivity, but also that it can consider that its forwarding task has been fulfilled and act accordingly (e.g. inform the first device A of the successful delivery of the message, etc.). Such an embodiment is thus the safest possible in terms of ensuring a proper delivery of the message to be forwarded, at the cost of a much longer temporary storage duration of the message by the forwarding device C, thus of increased risk regarding the confidentiality of this message.

In another embodiment, according to the exemplary method in Figure 1, after having received the first message, the second device B may also send a second message, being intended for the first device A, to the third device C through internet (step S300). Such a second message is typically a response to the first message.

At this stage, this third device C is in a location where it has an internet connection but is not necessarily in the proximity of the first device A, and thus cannot forward yet the second message to this first device A through a short range wireless connection. Consequently, after having received this second message, the third device C may store the second message from the second device B in its memory module (for instance in a local database stored in the memory of this third device C), just as it did for the first message. This allows the forwarding C to keep and transport this second message until it moves to a location where it is in the proximity of the first device A, i.e. where it can connect with this first device A through a short range wireless connection.

Afterwards, when the third device C determines that it can connect through a short-range wireless connection with the first device A,typically after it has moved in the vicinity of this first device A, which may be located in an area where the internet is no longer available, the forwarding device C forwards the second message to the first device A through a short-range wireless connection established with this first device A (step S400).

Here also, the second message may contain a second identification information related to the first device A which is inserted by the second device B. Such a second identification information is for example the phone number of the first device A (in particular its cell phone number) and can be used when the second message is sent to the third device C and/or when this second message is forwarded to the first device A by the third device C.

In addition, similarly to what may be done with the first message, after forwarding the second message to the first device A through the short-range wireless connection, the third device C may also be configured to delete the second message from its local database so that this second message is stored by the third device C only as long as necessary, i.e. from its reception until its forwarding to the first device A.

Similarly to what has been explained for the deletion of the first message, this deletion of the second message may be triggered automatically as soon as device C has transmitted this second message to the first device A through the short-range range wireless connection, or upon reception by the third device C of a receipt acknowledgement message, sent by the first device A through the short-range wireless connection upon reception of the second message. However, since this short-range wireless connection is usually a direct connection between devices located nearby from each other, the first of these two alternatives is more appropriate in this case.

In a specific aspect of this invention, the content of the first and/or the second message(s) can be at least partially, or more advantageously totally encrypted, such as by Advanced Encryption Standard AES, by their originating device (i.e. device A for the first message, device B for the second message) in such a way that the third device C is not able to decrypt at least the data content of these messages. This way, the user of the forwarding device C may not access the data content of the message(s) although they are temporarily stored by this third device C.

In a first embodiment of this specific aspect, the first and/or second identification information may remain unencrypted (the part of the message(s) containing data such as text, voice, video, and/or any form of information remains encrypted then), in order to allow the third device C to identify the intended recipient device for the message and to forward the message to this intended recipient device, be it through internet (in the case of the first message) or through a short-range wireless connection (in the case of the second message).

In a second embodiment of this specific aspect, the whole message(s) (including the first identification information related to the second device B) is encrypted so that the third device C not only has no access to the data content of the message(s), but also cannot identify the intended recipient device(s) of these message(s). In that case, when connected to internet, the third device C just forwards through internet the first message to a dedicated server it is associated with, without knowing which device is the final recipient of this message, nor the content of this message. It is then the dedicated server which will retrieve the identification information related to the second device B, in order to forward further this first message, as explained hereafter.

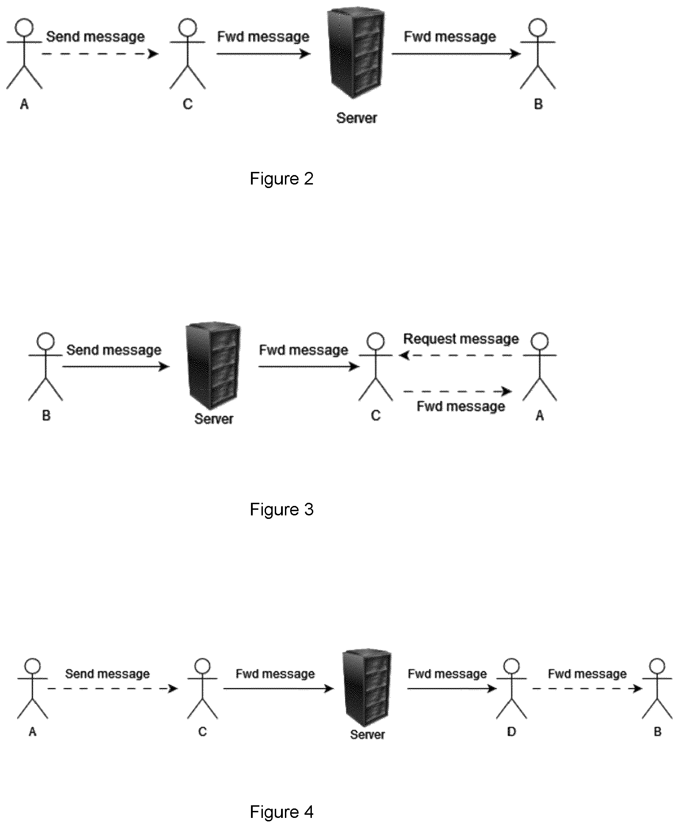

Referring now to **Figure 2****,** a more detailed embodiment of transmitting a first message from a first device A to a second device B is now discussed.

In this embodiment, the devices implemented according to the present invention can be smartphones, but these devices could be implemented by any kind of terminals, in particular any kind of mobile terminals. This is particularly the case for the third device C, which can be implemented in any kind of mobile terminal which has the ability to move from a first area where there is not internet connectivity (and thus can exchange messages with a first device A located in such a first area though a short-range wireless connection) to a second area where there is internet connectivity (and thus can exchange messages with a second device B located remotely through internet).

When the first device A has no internet connection and needs to send a first message to the second device B, it includes identification information related to the second device B (such as the phone number of the second device B) in a first message to be forwarded to this second device B.

The first device A can then list all surrounding devices through short-range wireless technology standard and identify in particular, within this list of surrounding devices, surrounding device(s) which have the capacity to forward the first message to second device B (for instance, they can be identified by determining that an application dedicated to such a forwarding service is installed on these devices).

Assuming that a third device C, which has the capacity to forward the first message, is identified within the list of surrounding devices, the first device A can then send (or push) identification information related to itself (such as its own cell phone number), identification information related to the second device B (such as this second device's cell phone number), along with the first message intended for the second device B through the available short-range wireless connection established with this third device C, wherein all information may be encrypted, which means the third device C cannot see the cell phone numbers and the message. In particular, a smartphone system of the devices provides API interface to use short-range wireless technology. The first device A can list connected Bluetooth devices on its UI, on which the third device C can be selected as a forwarding device to forward the first message to the second device B. Alternatively, the identification information related to first device A and/or second device B can be inserted into the message itself, which may be encrypted so that the third device C is neither able to see its content, nor to extract this identification information.

The third device C then receive the first message sent (or pushed) by the first device A and may store all the information in the first message, including the identification information (such as cell phone numbers) which may be sent together with this message or inserted in this message, in its memory module, and inparticular in a local database stored in its memory. Alternatively, the third device C can also be marked as a message passer in the first message at this stage, by inserting in this first message an indication that device C forwards this message.

When the third device C arrives in an area with internet connectivity and determines that such an internet connection is available, the third device C can then connect to internet and send all the information in the first message it carries to a dedicated server through the Internet. This dedicated server is, for example, a web server, which can be reached once the third device C can connect to internet, and in particular an application server specifically associated with a message forwarding application software installed on the third device C, when such an application software is relied upon for carrying on this forwarding task.

The third device C can send message to this web server through the HTTP protocol (or any other protocol that can exchange information over the Internet), for instance using a "HTTP/POST" request or similar requests for sending messages to a web server. The server will then send back an HTTP response which informs the third device C whether sending the message succeeded or failed, as well as possibly the reason for the failure.

Moreover, the third device C may also use both pull mode and push mode to receive messages from the web service. The third device C can send HTTP requests to the web server to pull the messages at a certain frequency, the messages to be sent by the web server to will be in the response of the HTTP request. Alternatively, the web server can also use a messaging server (for example, FCM of google) to push messages.

Furthermore, the third device C preferably detects automatically that it has arrived in an area with internet connectivity. In particular, smartphones can know when they are connected to Internet. For Android device, it can create a "Worker" module and set it to run automatically whenever the device connects to Internet.

Such a "Worker" module is a computer program which does not belong to an application or a service. It is typically part of an Application Programming Interface such as the WorkManager API in Android Jetpack, which is a lightweight background processing mechanism for executing asynchronous tasks. In the example of the WorkManager API in Android Jetpack, "Workers" run in WorkManager and can run within or outside the application process, such as in a background process or in a separate application, depending on the system resources and requirements.

The advantage of a "Worker" module is that it can run automatically at the appropriate time, such as when the device is idle, the battery is charged, or the network is available. "Workers" also support task chaining, allowing multiple "Workers" to be defined with a specified order and dependencies between them so that they can be executed sequentially when necessary. Unlike services, "Worker" lifecycle can be managed (e.g. by WorkManager) and they do not need to keep running all the time. They can stop automatically after completing their tasks.

Therefore, a "Worker" module is a mechanism that is well suited for executing background tasks. It can run within the application process or in a separate process or application, providing flexibility and reliability.

In the present case, the third device can create such a "worker" to send all information and set the "worker" to run automatically as soon as it connects to Internet. Then, the third device C will order that "worker" to send all information if it is connected to Internet automatically.

It should be noted that in the case where encryption (such as AES) is used in order to encrypt completely the first message, the third device C cannot decrypt the information related to the device(s) (such as their cell phone numbers), especially the one of the second device B, and the data content of this message, whereas the web server is able to decrypt at least the identification information related to the device(s) (such as their cell phone numbers), in order to forward the message to the correct target recipient, i.e. the second device B. Alternatively, especially when the message itself contains the identification information related to the second device B, the web server is able to decrypt the message, in order to parse it for retrieving the identification information.

Afterwards, the dedicated server may forward the first message to the second device B and inform the second device B that the first message comes from the first device A based on the identification information related to the first device A (e.g. the first device's cell phone number) as received with the first message. Additionally, the server may also mark the third device C as a message carrier of the first device A, by memorising the identification information related to the first device A in associated with an identification information related to the third device C, the latter being indicated as being a forwarding device for the former.

In order to forward the first message to the second device B, the server may advantageously first determine if it this second device B is connected to internet, and in particular if there is an established connection between the dedicated server and this second device B. If that is the case, then the dedicated server can forward the first message to the second device B through internet. If not, the dedicated server waits (i.e. keep the first message stored in a memory) until it detects such a connection with the second device B, then forwards the first message after such a detection.

Referring now to **Figure 3****,** a more detailed embodiment of transmitting a second message from the second first device B to the first device A is now discussed.

After receiving the first message as illustrated in figure 2, the second device B may also send a second message being intended for the first device A via internet to the server. Since the web server has stored the information that the third device C is the first device's message carrier, when it receives this second message and determines that this second message is intended for the first device A, the web server can identify the third device C as being a forwarding device of messages for device A and thus may send the second message to this third device C.

Afterwards, when the third device C comes in the first device A's vicinity where a short-range wireless connection with this first device A is available (and possibly where no internet connection is available), the first device A may check with and request the third device C to provide any message intended to the first device A through short-range wireless connection. In such a situation, when the third device C carries the second message it has received from the second device B, the third device C sends this second message (which may include the cell phone number of the second device B) to first device A through a short-range wireless connection established with this first device A. When the information of the second message is encrypted, the first device A can then decrypt it, in order to display it properly on the first device A.

Referring now to **Figure 4****,** another detailed embodiment of transmitting a first message from the second first device B to the first device A is now discussed.

This other embodiment is similar to the embodiment discussed previously in relation to figure 2, except that there is fourth device D provided between the server and the second device B, which acts as a forwarding device for this second device B and thus can provide the first message to this second device B without that this second device B accesses internet.

In details, the first device A sends a first message (with an identification information related to the second device B such as its phone number) to the first forwarding device C through a short range wireless connection (e.g. Bluetooth) and, when the first forwarding device C is able to connect to internet, the first forwarding device C forwards this message (and the an identification information related to the second device B) to the server, as explained previously.

At this stage, instead of directly forwarding this message to the second device B as in the embodiment previously illustrated in figure 2, the server determines whether a second forwarding device D would be associated with the second device B.

This can be the case for instance if the second device B has already sent messages through a forwarding device : in that case, the server has stored an identification information related to the second device B (e.g. its phone number) in association with an identification information related to the forwarding device it used (e.g. its phone number). By retrieving this association, the server can identify a second forwarding device D able to forward the first message to the second device B.

Alternatively, a specific second forwarding device D may have been already registered for second device B at the server, for instance by the second device B (or even the second forwarding device D) sending to the server a request indicating that the second forwarding device D is a forwarding device for the second device B. Also in that case, by retrieving this indication, the server can identify a second forwarding device D able to forward the first message to the second device B.

After having identified the device D, if the server detects a connection with this device D (which implies that this device D has an internet connection), the server forwards the first message (and the identification information related to the second device), and possibly any other message(s) it has stored which are intended to devices for which device D acts as a forwarding device, to this device D, either through a push request or upon receiving a pull request from this device D.

Once it has forwarded the message to the device D, the server can delete this first message from its memory, in order to limit the risk of privacy issues in case this server would be hacked.

Here again, similarly to what has been said previously regarding the deletion of this first message by the third device C, the deletion of this first message by the server can be automatically triggered as soon as the server has transmitted the first message to the device D or can be automatically triggered upon reception of a receipt acknowledgement message, sent by the fourth device D, respectively by the second device B, to the server upon reception of the first message.

In the first case, the duration of this first message temporary storage by the server is minimized (hence minimizing its confidentiality) but the server has no guarantee that this first message is properly delivered, while in the second case, the server can be ensured of the proper delivery of the first message to the device D, respectively the second device B, at the cost of a proportionally increased confidentiality risk in case this server would be hacked.

Once it has received this first message, the device D stores it in its local database until it detects, thanks to the identification information related to the second device B, that it can connect with this second device B through a short range wireless connection (e.g. Bluetooth). When this is the case (i.e. because for instance the device D has moved in the vicinity of this device B which is potentially without internet connection), device D first connects with device B using this short range wireless technology, then forwards the first message to device B. After having forwarded the first message, device D can delete this message from its local database, in order to limit the risk of privacy issues if an unauthorized person gets access to this local database.

Similarly to what has been explained for the deletion of the second message by the third device C, this deletion of the first message by device D may be triggered automatically as soon as device D has transmitted this message to device B through the short-range range wireless connection, or upon reception by device D of a receipt acknowledgement message, sent by the second device B through the short-range wireless connection upon reception of the first message. However, since this short-range wireless connection is usually a direct connection between devices located nearby, the first of these two alternatives is more appropriate in this case.

In the preceding description, a first embodiment (as previously discussed in relation to figure 2) concerning the "direct" forwarding of the first message from the dedicated server to device B, which is particularly advantageous when there is no known second forwarding device for this device B, as being distinguished from a second embodiment (as previously discussed in relation to figure 4) concerning the "indirect" forwarding of the first message, from the dedicated server to a second forwarding device D, then from this forwarding device D to device B.

However, in order to allow the dedicated server to offer both "direct" and "indirect" forwarding, another embodiment can be derived, which gathers the principles of both these embodiments.

In more details, once it has received and stored a first message intended to device B from the forwarding device C, the dedicated server may determine whether a connection through internet with either device B, or a forwarding device D for this device B, is available.

If a connection through internet with device B is available, the dedicated server forwards the first message directly to device B, as explained in the embodiment discussed in relation with figure 2.

If no connection through internet with device B is available but a connection through internet with a forwarding device D (registered as a forwarding device for device B) is available, the dedicated server forwards the first message to forwarding device D, as explained in the embodiment discussed in relation with figure 4.

If no connection through internet with either device B or a forwarding device D for this device B is available, then the dedicated server waits (i.e. keep the first message stored in a memory) until it detects that such a connection through internet can be established, with either one of the device B or a forwarding device D for this device B. When that is the case, the dedicated server forwards the first message to the device with which a connection through internet is first established, as described in relation with either figure 2 or figure 4, depending on the type of device for which the availability of an internet connection detected.

In all the previously discussed embodiments, the devices have been described as either sending, forwarding or transmitting messages. In order to do so, on top of the usual features that such devices may comprise (i.e. one or more processors(s), an input interface such as a keyboard or a touchscreen, an output interface such as a screen, a memory, etc.), these devices may comprise specific modules for implementing the present invention, such as :
- A message transmitting module, configured to receive and prepare the message to be transmitted (for instance, among others, by encrypting it), to obtain the identification information related to the recipient of this message (e.g. the phone number of the second device B), to detect a potential forwarding device through a short range wireless connection such as Bluetooth and, when such a second device wireless connection is established, to send this message to this forwarding device using this short range wireless connection. Such a message transmitting module is typically used in the first device A when it sends the first message as illustrated in figure 2, but also in the second device B when it sends a second message as illustrated in figure 3.
- A message receiving module, configured to detect a potential forwarding device through a short range wireless connection such as Bluetooth, to receive messages from this forwarding device using this short range wireless connection when such a second device wireless connection is established, and to process this received message (for instance, among others, by decrypting it) so that this message can be read or displayed to its intended recipient. Such a message receiving module is typically used in the second device B when it receives the first message as illustrated in figure 2, but also in the first device A when it receives a second message as illustrated in figure 3.
- A message forwarding module, configured to receive messages from other devices through a short range wireless connection such as Bluetooth, store these messages, forward these messages to a dedicated server when an internet connection is available and preferably delete these messages when they have been forwarded to the server. This message forwarding module may also be configured to receive messages from this dedicated server when an internet connection is available, store these messages, identify the intended recipient of these messages based on received identification information, forward these messages to the identified recipient device through a short range wireless connection such as Bluetooth, when such a short range wireless connection is established with this recipient device, and preferably delete these messages when they have been forwarded to the recipient device.

Each of these specific modules may be implemented as a computer program comprising code instructions for performing the steps as described in relation with the specific module. This computer program can either be natively configured in a device (such as a mobile device, smartphone, tablet, etc.), in particular in the Operating System running on this device, or alternatively be implemented as an application software to download on such a device.

In an advantageous embodiment, all these specific modules may be gathered in a single message processing module, in particular in the form of a single application to be download on a device (such as a mobile device, smartphone, tablet, etc.) : in that way, once it has downloaded this application, the device can send or receive messages through forwarding devices and/or act as a forwarding device for other devices, depending on its location and its user's needs or preferences.

Moreover, it is known to those skilled in the art, the aforementioned examples according to the present invention, can be implemented in many ways, such as program instructions for execution by a processor, as software modules, microcode, as computer program product on computer readable media, as logic circuits, as application specific integrated circuits, as firmware, etc. The embodiments of the invention can take the form of an entirely hardware embodiment, an entirely software embodiment or an embodiment containing both hardware and software elements. In a preferred embodiment, the invention is implemented in software, which includes but is not limited to firmware, resident software, microcode, etc.

Furthermore, the embodiments of the invention can take the form of a computer program product accessible from a computer-usable or computer-readable medium providing program code for use by or in connection with a computer, processing device, or any instruction execution system. For the purposes of this description, a computer-usable or computer readable medium can be any apparatus that can contain, store, communicate, or transport the program for use by or in connection with the instruction execution system, apparatus, or device. The medium can be electronic, magnetic, optical, or a semiconductor system (or apparatus or device).

The embodiments described hereinabove are illustrations of this invention. Various modifications can be made to them without leaving the scope of the invention which stems from the annexed claims.

## Claims

1. A method for message transmission between a first device (A) and a second device (B), comprising:
- storing, by a third device (C), a first message received from the first device (A) through a short-range wireless connection, said first message being intended for the second device (B); and
- after a positive determination that a connection to internet is established, forwarding the first message from the third device (C) towards a dedicated server through internet;
- sending the first message from the dedicated server to a fourth device (D) which is capable of being associated through a short-range wireless connection with the second device (B); and
- forwarding the first message from the fourth device (D) to the second device (B) when a short-range wireless connection is established between the fourth device (D) and said second device (B).

2. The method according to claim 1 wherein the method further comprises the following steps, performed by the first device (A) before the third device (C) receives the first message :
- detecting at least one device able to forward the first message to the second device ; and
- selecting said third device among the detected at least one device.

3. The method according to any one of claims 1 to 2, wherein a first identification information related to the second device is inserted by the first device in the first message, said first identification information being used when forwarding the first message to the second device.

4. The method according to any one of claims 1 to 3, further comprising, after the step of forwarding the first message towards said second device (B) through internet, deleting said first message.

5. The method according to claim 4, wherein the step of deleting said first message is automatically triggered upon the transmission, by said third device (C), of the first message towards said second device (B).

6. The method according to claim 4, wherein the step of deleting said first message is automatically triggered upon reception, by said third device (C), of a receipt acknowledge message, sent by one of said second device (B), dedicated server or fourth device (D) upon receiving said first message.

7. The method according to any one of claims 1 to 6, further comprising:
- storing a second message received from the second device through internet, said second message being intended for the first device; and
- after a positive determination that a short-range wireless connection can be established with the first device, forwarding the second message to said first device through said short-range wireless connection.

8. The method according to claim 7, wherein a second identification information related to the first device is inserted by the second device in the second message, said second identification information being used by the second device when sending the second message through internet and/or when forwarding the second message to the first device through a short-range wireless connection.

9. The method according to any one of claims 1 to 8, further comprising deleting the first message stored in a third device after having forwarded said first message towards the second device through internet and/or deleting the second message stored in a fourth device after having forwarded said second message to the first device.

10. The method according to any one of claims 1 to 9, wherein the first message is encrypted.

11. A system for forwarding messages between a first device (A) and a second device (B), said system comprising a third device (C), a dedicated server and a fourth device (D), wherein the third device (C) comprises:
- a module for receiving a first message from the first device (A) through a short-range wireless connection, said first message being intended for the second device (B);
- a module for storing the received first message; and
- a module for, after a positive determination that the third device (C) has established a connection to internet, forwarding the first message from the third device (C) towards the dedicated server through internet,
wherein the dedicated server is configured to forward the first message to the fourth device (D) capable of being associated through a short-range wireless connection with the second device (B).

12. The system according to claim 11, the third device further comprising:
- a module for receiving a second message from the second device through internet, said second message being intended for said first device;
- a module for storing said second message; and
- a module for, after a positive determination that the third device can connect with the first device through a short-range wireless connection, forwarding the second message to said first device through said short-range wireless connection.

13. A computer program comprising instructions which, when the program is executed by a processing module of a device, cause the processing module to carry out the method of any one of claims 1 to 10.

## Patentansprüche

1. Verfahren zur Nachrichtenübertragung zwischen einer ersten Vorrichtung (A) und einer zweiten Vorrichtung (B), umfassend:
- Speichern, durch eine dritte Vorrichtung (C), einer ersten Nachricht, die von der ersten Vorrichtung (A) über eine drahtlose Nahbereichsverbindung empfangen wird, wobei die erste Nachricht für die zweite Vorrichtung (B) bestimmt ist; und
- nach einem Bestätigen, dass eine Verbindung zum Internet hergestellt ist, Weiterleiten der ersten Nachricht von der dritten Vorrichtung (C) über das Internet an einen dedizierten Server;
- Senden der ersten Nachricht von dem dedizierten Server an eine vierte Vorrichtung (D), die dazu in der Lage ist, über eine drahtlose Nahbereichsverbindung mit der zweiten Vorrichtung (B) verknüpft zu werden; und
- Weiterleiten der ersten Nachricht von der vierten Vorrichtung (D) an die zweite Vorrichtung (B), wenn eine drahtlose Nahbereichsverbindung zwischen der vierten Vorrichtung (D) und der zweiten Vorrichtung (B) hergestellt ist.

2. Verfahren nach Anspruch 1, wobei das Verfahren ferner die folgenden Schritte umfasst, die durch die erste Vorrichtung (A) durchgeführt werden, bevor die dritte Vorrichtung (C) die erste Nachricht empfängt:
- Erfassen mindestens einer Vorrichtung, die dazu in der Lage ist, die erste Nachricht an die zweite Vorrichtung weiterzuleiten; und
- Auswählen der dritten Vorrichtung unter der erfassten mindestens einen Vorrichtung.

3. Verfahren nach einem der Ansprüche 1 bis 2, wobei erste Identifikationsinformationen, die sich auf die zweite Vorrichtung beziehen, durch die erste Vorrichtung in die erste Nachricht eingefügt werden, wobei die ersten Identifikationsinformationen verwendet werden, wenn die erste Nachricht an die zweite Vorrichtung weitergeleitet wird.

4. Verfahren nach einem der Ansprüche 1 bis 3, ferner umfassend, nach dem Schritt des Weiterleitens der ersten Nachricht zu der zweiten Vorrichtung (B) über das Internet, Löschen der ersten Nachricht.

5. Verfahren nach Anspruch 4, wobei der Schritt des Löschens der ersten Nachricht automatisch bei der Übertragung der ersten Nachricht an die zweite Vorrichtung (B) durch die dritte Vorrichtung (C) ausgelöst wird.

6. Verfahren nach Anspruch 4, wobei der Schritt des Löschens der ersten Nachricht automatisch ausgelöst wird, wenn durch die dritte Vorrichtung (C) eine Empfangsbestätigungsnachricht empfangen wird, die durch die zweite Vorrichtung (B), den dedizierten Server oder die vierte Vorrichtung (D) beim Empfangen der ersten Nachricht gesendet wird.

7. Verfahren nach einem der Ansprüche 1 bis 6, ferner umfassend:
- Speichern einer zweiten Nachricht, die von der zweiten Vorrichtung über das Internet empfangen wird, wobei die zweite Nachricht für die erste Vorrichtung bestimmt ist; und
- nach einem Bestätigen, dass eine drahtlose Nahbereichsverbindung mit der ersten Vorrichtung hergestellt werden kann, Weiterleiten der zweiten Nachricht über die drahtlose Nahbereichsverbindung an die erste Vorrichtung.

8. Verfahren nach Anspruch 7, wobei zweite Identifikationsinformationen, die sich auf die erste Vorrichtung beziehen, durch die zweite Vorrichtung in die zweite Nachricht eingefügt werden, wobei die zweiten Identifikationsinformationen durch die zweite Vorrichtung verwendet werden, wenn die zweite Nachricht über das Internet gesendet wird und/oder wenn die zweite Nachricht über eine drahtlose Nahbereichsverbindung an die erste Vorrichtung weitergeleitet wird.

9. Verfahren nach einem der Ansprüche 1 bis 8, ferner umfassend das Löschen der ersten Nachricht, die in einer dritten Vorrichtung gespeichert ist, nachdem sie die erste Nachricht über das Internet an die zweite Vorrichtung weitergeleitet hat, und/oder das Löschen der zweiten Nachricht, die in einer vierten Vorrichtung gespeichert ist, nachdem sie die zweite Nachricht an die erste Vorrichtung weitergeleitet hat.

10. Verfahren nach einem der Ansprüche 1 bis 9, wobei die erste Nachricht verschlüsselt ist.

11. System zum Weiterleiten von Nachrichten zwischen einer ersten Vorrichtung (A) und einer zweiten Vorrichtung (B), das System umfassend eine dritte Vorrichtung (C), einen dedizierten Server und eine vierte Vorrichtung (D), wobei die dritte Vorrichtung (C) umfasst:
- ein Modul zum Empfangen einer ersten Nachricht von der ersten Vorrichtung (A) über eine drahtlose Nahbereichsverbindung, wobei die erste Nachricht für die zweite Vorrichtung (B) bestimmt ist;
- ein Modul zum Speichern der empfangenen ersten Nachricht; und
- ein Modul, um nach dem Bestätigen, dass die dritte Vorrichtung (C) eine Verbindung zum Internet aufgebaut hat, die erste Nachricht von der dritten Vorrichtung (C) über das Internet an den dedizierten Server weiterzuleiten;
wobei der dedizierte Server dazu ausgelegt ist, die erste Nachricht an die vierte Vorrichtung (D) weiterzuleiten, die dazu in der Lage ist, über eine drahtlose Nahbereichsverbindung mit der zweiten Vorrichtung (B) verknüpft zu werden.

12. System nach Anspruch 11, die dritte Vorrichtung ferner umfassend:
- ein Modul zum Empfangen einer zweiten Nachricht von der zweiten Vorrichtung über das Internet, wobei die zweite Nachricht für die erste Vorrichtung bestimmt ist;
- ein Modul zum Speichern der zweiten Nachricht; und
- ein Modul zum Weiterleiten der zweiten Nachricht an die erste Vorrichtung nach dem Bestätigen, dass die dritte Vorrichtung über eine drahtlose Nahbereichsverbindung mit der ersten Vorrichtung verbunden werden kann, über die drahtlose Nahbereichsverbindung.

13. Computerprogramm, umfassend Anweisungen, die dann, wenn das Programm durch ein Prozessormodul ausgeführt wird, das Prozessormodul veranlassen, das Verfahren nach einem der Ansprüche 1 bis 10 auszuführen.

## Revendications

1. Procédé pour transmission de message entre un premier dispositif (A) et un deuxième dispositif (B), comprenant :
- le stockage, par un troisième dispositif (C), d'un premier message reçu en provenance du premier dispositif (A) par le biais d'une connexion sans fil à courte portée, ledit premier message étant destiné au deuxième dispositif (B) ; et
- après une détermination positive qu'une connexion à Internet est établie, le transfert du premier message depuis le troisième dispositif (C) vers un serveur spécialisé par le biais d'Internet ;
- l'envoi du premier message depuis le serveur spécialisé à un quatrième dispositif (D) capable d'être associé par le biais d'une connexion sans fil à courte portée au deuxième dispositif (B) ; et
- le transfert du premier message depuis le quatrième dispositif (D) au deuxième dispositif (B) lorsqu'une connexion sans fil à courte portée est établie entre le quatrième dispositif (D) et ledit deuxième dispositif (B).

2. Procédé selon la revendication 1 dans lequel le procédé comprend en outre les étapes suivantes, réalisées par le premier dispositif (A) avant que le troisième dispositif (C) ne reçoive le premier message :
- la détection d'au moins un dispositif capable de renvoyer le premier message au deuxième dispositif ; et
- la sélection dudit troisième dispositif parmi l'au moins un dispositif détecté.

3. Procédé selon l'une quelconque des revendications 1 et 2, dans lequel une première information d'identification relative au deuxième dispositif est insérée par le premier dispositif dans le premier message, ladite première information d'identification étant utilisée lors du transfert du premier message au deuxième dispositif.

4. Procédé selon l'une quelconque des revendications 1 à 3, comprenant en outre, après l'étape du transfert du premier message vers ledit deuxième dispositif (B) par le biais d'Internet, la suppression dudit premier message.

5. Procédé selon la revendication 4, dans lequel l'étape de la suppression dudit premier message est déclenchée automatiquement à la suite de la transmission, par ledit troisième dispositif (C), du premier message vers ledit deuxième dispositif (B).

6. Procédé selon la revendication 4, dans lequel l'étape de la suppression dudit premier message est déclenchée automatiquement à la suite de la réception, par ledit troisième dispositif (C), d'un message d'accusé de réception, envoyé par un dudit deuxième dispositif (B), dudit serveur spécialisé, ou dudit quatrième dispositif (D) à la suite de la réception dudit premier message.

7. Procédé selon l'une quelconque des revendications 1 à 6, comprenant en outre :
- le stockage d'un second message reçu en provenance du deuxième dispositif par le biais d'Internet, ledit second message étant destiné au premier dispositif ; et
- après une détermination positive qu'une connexion sans fil à courte portée peut être établie au premier dispositif, le transfert du second message audit premier dispositif par le biais de ladite connexion sans fil à courte portée.

8. Procédé selon la revendication 7, dans lequel une seconde information d'identification relative au premier dispositif est insérée par le deuxième dispositif dans le second message, ladite seconde information d'identification étant utilisée par le deuxième dispositif lors de l'envoi du second message par le biais d'Internet et/ou lors du transfert du second message au premier dispositif par le biais d'une connexion sans fil à courte portée.

9. Procédé selon l'une quelconque des revendications 1 à 8, comprenant en outre la suppression du premier message stocké dans un troisième dispositif après avoir renvoyé ledit premier message vers le deuxième dispositif par le biais d'Internet et/ou la suppression du second message stocké dans un quatrième dispositif après avoir renvoyé ledit second message au premier dispositif.

10. Procédé selon l'une quelconque des revendications 1 à 9, dans lequel le premier message est chiffré.

11. Système pour transférer des messages entre un premier dispositif (A) et un deuxième dispositif (B), ledit système comprenant un troisième dispositif (C), un serveur spécialisé, et un quatrième dispositif (D), dans lequel le troisième dispositif (C) comprend :
- un module pour recevoir un premier message en provenance du premier dispositif (A) par le biais d'une connexion sans fil à courte portée, ledit premier message étant destiné au deuxième dispositif (B) ;
- un module pour stocker le premier message reçu ; et
- un module pour, après une détermination positive que le troisième dispositif (C) a établi une connexion à Internet, transférer le premier message depuis le troisième dispositif (C) vers le serveur spécialisé par le biais d'Internet,
dans lequel le serveur spécialisé est configuré pour transférer le premier message au quatrième dispositif (D) capable d'être associé par le biais d'une connexion sans fil à courte portée au deuxième dispositif (B).

12. Système selon la revendication 11, le troisième dispositif comprenant en outre :
- un module pour recevoir un second message en provenance du deuxième dispositif par le biais d'Internet, ledit second message étant destiné audit premier dispositif ;
- un module pour stocker ledit second message ; et
- un module pour, après une détermination positive que le troisième dispositif peut se connecter au premier dispositif par le biais d'une connexion sans fil à courte portée, transférer le second message audit premier dispositif par le biais de ladite connexion sans fil à courte portée.

13. Programme d'ordinateur comprenant des instructions qui, lorsque le programme est exécuté par un module de traitement d'un dispositif, amènent le module de traitement à effectuer le procédé de l'une quelconque des revendications 1 à 10.
